(19) Europäisches Patentamt
European Patent Office
Office européen des brevets

(11) Publication number : **0 346 403 B1**

# (12) EUROPEAN PATENT SPECIFICATION

(45) Date of publication of patent specification : **24.03.93 Bulletin 93/12**

(51) Int. Cl.[5] : **C08L 79/08**

(21) Application number : **88908618.7**

(22) Date of filing : **03.12.87**

(86) International application number : **PCT/US87/03107**

(87) International publication number : **WO 89/05332 15.06.89 Gazette 89/13**

## (54) FLAME RESISTANT POLYETHERIMIDE RESIN BLENDS.

The file contains technical information submitted after the application was filed and not included in this specification

(43) Date of publication of application : **20.12.89 Bulletin 89/51**

(45) Publication of the grant of the patent : **24.03.93 Bulletin 93/12**

(84) Designated Contracting States : **DE FR GB IT NL**

(56) References cited :
**EP-A- 0 186 243**
**EP-A- 0 224 696**
**EP-A- 0 266 595**
**WO-A-84/04752**
**FR-E- 2 236 887**
**US-A- 4 387 193**
**US-A- 4 586 997**

(73) Proprietor : **GENERAL ELECTRIC COMPANY**
**1 River Road**
**Schenectady, NY 12345 (US)**

(72) Inventor : **ROCK, John, A.**
**Route 8**
**Becket, MA 02334 (US)**
Inventor : **MALE, L., Joseph**
**RD 10**
**Old Chatham, NY 12136 (US)**
Inventor : **DURFEE, Norman, E., Jr.**
**Billings**
**Lansboro, MA 01237 (US)**

(74) Representative : **Pratt, Richard Wilson et al**
**London Patent Operation G.E. Technical Services Co. Inc. Essex House 12/13 Essex Street**
**London WC2R 3AA (GB)**

EP 0 346 403 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polymer blends which are characterized by high impact strengths, good blow moldability, good injection moldability, amenability to thermoforming, excellent solvent resistance and very low flammability. The polymer blends are particularly suited for the construction of various panels and parts for aircraft interiors.

Because of their light weight, durability and strength, engineering thermoplastics are used for the construction of many components of aircraft interiors. Components such as wall panels, overhead storage lockers, serving trays, seat backs, cabin partitions and the like are conveniently and economically fabricated by extrusion, thermoforming, injection molding and blow-molding techniques. The thermoplastic resins used in these components, therefore, should be amenable to such fabrication techniques.

Aircraft cabin interior components often are exposed to various solvents, such as detergents, cleaning solutions, paints and paint removers and the like. Such solvents and solutions may cause deterioration, such as cracking and crazing of parts fabricated from some thermoplastic materials. It is very desirable that engineering thermoplastics used for fabricating such parts exhibit resistance to deterioration by solvents.

Recent attention to the effects of fire and smoke on survivability during aircraft mishans has led to the promulgation of standards for the flame resistance of construction materials used for the interiors of transport category aircraft. One drawback of engineering thermoplastics conventionally used for the construction of aircraft interior components is their inability to meet the latest flammability performance standards.

Such standards are embodied in 1986 amendments to Part 25-Airworthiness Standards-Transport Category Airplanes of Title 14, Code of Federal Regulations. (See 51 Federal Register 26206, July 21, 1986 and 51 Federal Register 28322, August 7, 1986.) The flammability standards are based on heat calorimetry tests developed at Ohio State University. Such tests are described in the above-cited amendments to 14 C.F.R. Part 25.

WO-A-8 404 752 discloses blends of (a) a polyetherimide and (b) a thermoplastic polycarbonate. The blends may contain two or more polyetherimides in combination with one or more polycarbonates. Among the various polyetherimides are included polyetherimides containing polydiorganosiloxane linkages. However, there is no specific disclosure in WO-A-8 404 752 of blends comprising a polyetherimide, a siloxane polyetherimide and a polycarbonate.

U.S-A-4 387 193 discloses blends of (a) a polyetherimide and (b) an organopolysiloxane-polycarbonate block copolymer. Such blends are said to exhibit a good combination of impact strength and flexural properties.

EP-A-266 595 filed on 16 October 1987 and published on 11 may 1988 and is therefore not relevant to the question of inventive step discloses flame retardant polymer blends containing a polyetherimide and an impact strength-enhancing amount of a siloxane-polyetherimide copolymer.

Heretofore, no conventional engineering thermoplastics, having the requisite physical properties and processing characteristics, have been able to meet the flammability standards referred to in the preceeding paragraph.

In accordance with the present invention, polymer blend compositions contain a polyetherimide, an impact strength-enhancing amount of siloxane polyetherimide copolymer and a solvent-resistance enhancing amount of a polycarbonate.

The polymer blends of this invention have been found to possess the physical and chemical resistance properties important for applications as aircraft cabin interior components. Moreover, these blends meet or exceed the rigorous flammability standards that have been established for such aircraft interior components.

The polyetherimides employed in the blends of this invention are well-known injection moldable engineering thermoplastics. Polytherimides are characterized by high impact strengths, high temperature resistance and good processability. Unmodified polyetherimides have not, however, found widespread use in blow-molding applications.

The polyetherimides used for preparing the blends of this invention contain repeating groups of the formula

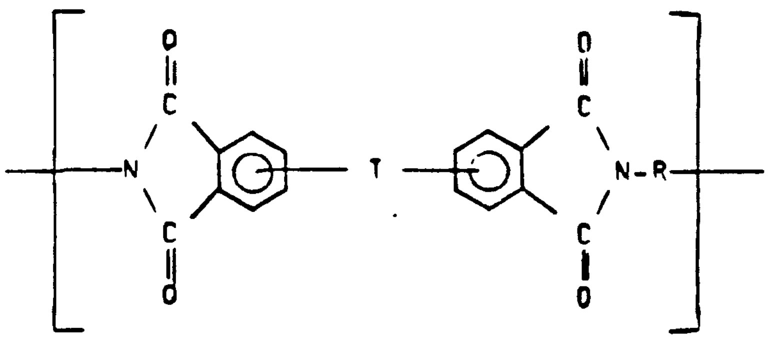

the number of such groups being greater than 1, e.g., from 10 to 10,000 or more; T is -0- or a group of the formula

-O-Z-O-

wherein the divalent bonds of the -O- or the -O-Z-O- group are in the 3,3′; 3,4′; 4,3′, or the 4,4′ positions; Z is a member of the class consisting of (A):

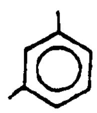 , 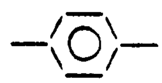 , 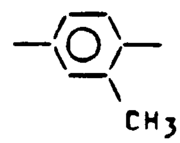 ,

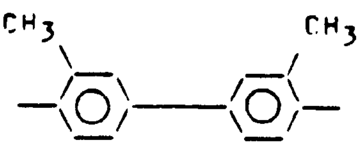 , 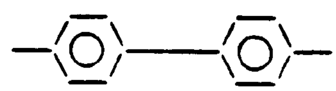

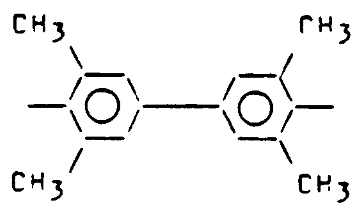 and 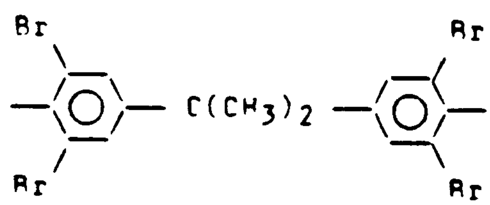

and (B) divalent organic radicals of the general formula

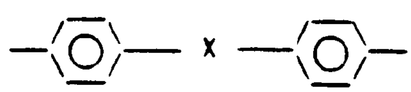

where X is a member selected from the group consisting of divalent radicals of the formulas

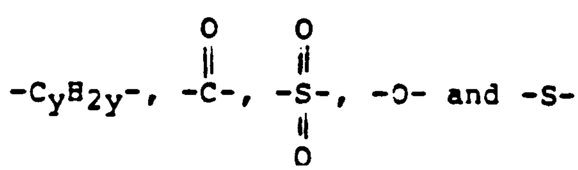

where y is an integer from 1 to 5; and R is a divalent organic radical selected from the group consisting of (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalent radicals of the general formula

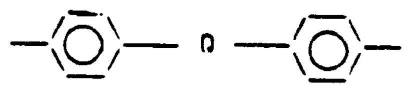

where Q is a member selected from the group consisting of

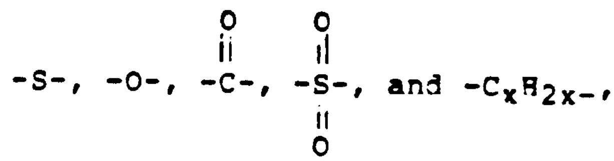

and x is an integer from 1 to 5.

In one embodiment, the polyetherimide may be a copolymer which, in addition to the etherimide units described above, further contains polyimide repeating units of the formula

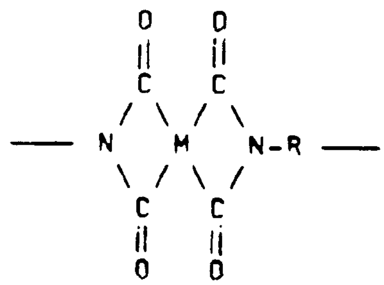

wherein R is as previously defined and M is selected from the group consisting of

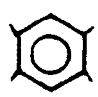 , 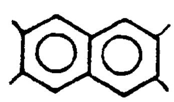 and 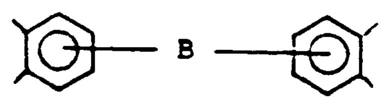

where B is -S- or

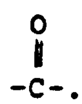

These polyetherimide copolymers and their preparation are described in U.S-A-3,983,093.

The polyetherimides can be prepared by any of the methods well known to those skilled in the art, including the reaction of an aromatic bis(ether anhydride) of the formula

(I) 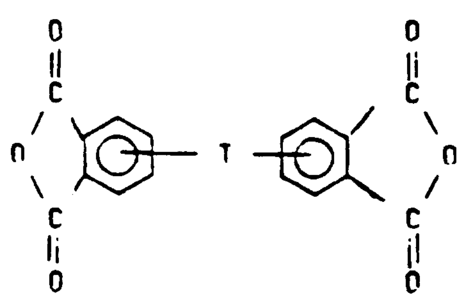

with an organic diamine of the formula

(II) $H_2N-R-NH_2$

wherein T and R are defined as described above.

Bis(ether anhydride)s of formula I include, for example,

1,3-bis(2,3-dicarboxyphenoxy)benzene dianhydride;
1,4-bis(2,3-dicarboxyphenoxy)benzene dianhydride;
1,3-bis(3,4-dicarboxyphenoxy)benzene dianhydride;
1,4-bis(3,4-dicarboxyphenoxy)benzene dianhydride;

and

4,4'-bis(phthalic anhydride)ether.

A preferred class of aromatic bis(ether anhydride)s included by formula I includes compounds of formula III, IV and V, which follow:

(III) 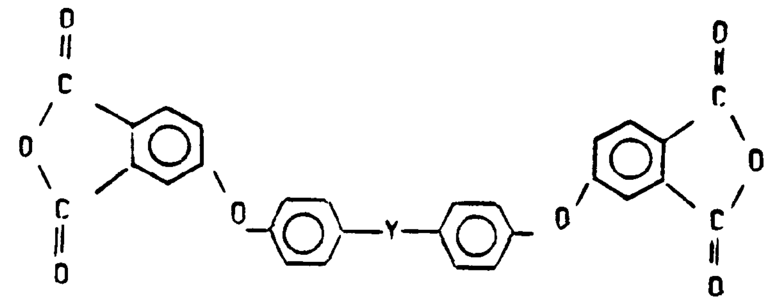

(IV) 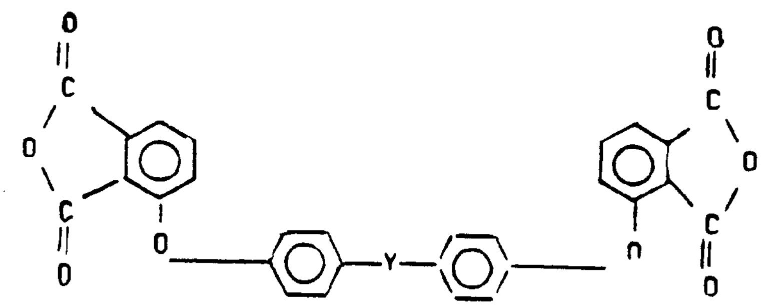

(V) 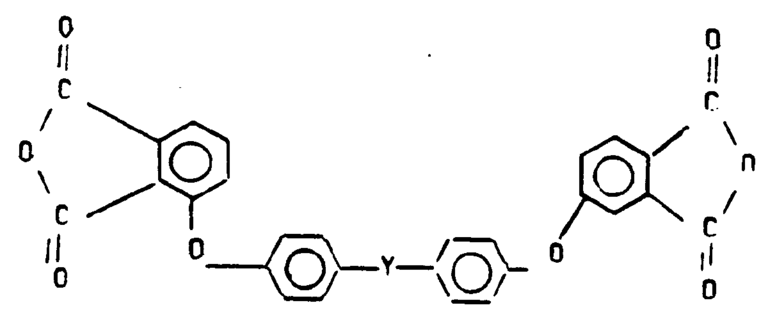

and mixtures thereof, where Y is selected from the group consisting of -O-, -S-,

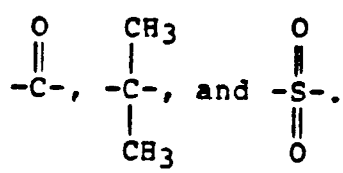

Aromatic bis(ether anhydride)s of formula III include, for example:

2,2-bis[4-(3,4-dicarboxyphenoxy)phenyl]propane dianhydride;
4,4'-bis(3,4-dicarboxyphenoxy)diphenyl ether dianhydride;
4,4'-bis(3,4-dicarboxyphenoxy)diphenyl sulfide dianhydride;
4,4'-bis(3,4-dicarboxyphenoxy)benzophenone dianhydride;

4,4'-bis(3,4-dicarboxyphenoxy)diphenyl sulfone dianhydride; and mixtures thereof.

Aromatic bis(ether anhydride)s of formula IV include, for example:

2,2-bis([4-(2,3-dicarboxyphenoxy)phenyl]propane dianhydride;
4,4'-bis(2,3-dicarboxyphenoxy)diphenyl ether dianhydride;
4,4'-bis(2,3-dicarboxyphenoxy)diphenyl sulfide dianhydride;
4,4'-bis(2,3-diacarboxyphenoxy)benzophenone dianhydride;
4,4'-bis(2,3-dicarboxyphenoxy)diphenyl sulfone dianhydride; and mixtures thereof.

The aromatic bis(ether anhydride)s of formula V may be, for example,

4-(2,3-dicarboxyphenoxy)-4'-(3,4-dicarboxyphenoxy) diphenyl-2,2-propane dianhydride.
4-(2,3-dicarboxyphenoxy)-4'-(3,4-dicarboxyphenoxy) diphenyl ether dianhydride;
4-(2,3-dicarboxyphenoxy)-4'-(3,4-dicarboxyphenoxy) diphenyl sulfide dianhydride;
4-(2,3-dicarboxyphenoxy)-4'-(3,4-dicarboxyphenoxy) benzophenone dianhydride;
4-(2,3-dicarboxyphenoxy)-4'-(3,4-dicarboxyphenoxy) diphenyl sulfone dianhydride, and mixtures thereof.

When polyetherimide/polyimide copolymers are employed, a dianhydride, such as pyromellitic anhydride, is used in combination with the bis(ether anhydride).

Some of the aromatic bis(ether anhydride)s of formula (I) are shown in U.S-A-3,972,902. As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also included by formula (I) above are shown by Koton, M.M., Florinski, T.S., Bessonov, M.I. and Rudakov, A.P. (Institute of Heteroorganic Compounds, Academy of Sciences, U.S.S.R), U.S.S.R. patent 257,010, November 11, 1969, Appl. May 3, 1967, and by M.M. Koton, F.S. Florinski, Zh. Org. Khin. 4(5), 774 (1968).

The organic diamines of formula (II) include, for example:

m-phenylenediamine,
p-phenylenediamine,
4,4'-diaminodiphenylpropane,
4,4'-diaminodiphenylmethane (commonly named 4,4'-methylenedianiline),
4,4'-diaminodiphenyl sulfide,
4,4'-diaminodiphenyl sulfone,
4,4'-diaminodiphenyl ether (commonly named 4,4'-oxydianiline),
1,5-diaminonaphthalene,
3,3-diamethylbenzidine,
3,3-dimethoxybenzidine,
2,4-bis(beta-amino-t-butyl)toluene,
bis(p-beta-amino-t-butylphenyl)ether,
bis(p-beta-methyl-o-aminophenyl)benzene,
1,3-diamino-4-isopropylbenzene,
1,2-bis(3-aminopropoxy)ethane,
benzidine,
m-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1-4,cyclohexanediamine,
1,12-octadecanediamine,
bis(3-aminopropyl)sulfide,

N-methyl-bis(3-aminopropyl)amine,
hexamethylenediamine,
heptamethylenediamine,
nonamethylenediamine,
decamethylenediamine, and
mixtures of such diamines.

Preferred polyetherimides are available commercially from General Electric Company, Pittsfield, Massachusetts U.S.A. under the registered trademark, ULTEM.

The siloxane polyetherimide copolymers employed in the blends of this invention may be prepared in a manner similar to that used for polyetherimides, except that a portion or all of the organic diamine reactant is replaced by an amine-terminated organosiloxane of the formula

$$\text{(VI)} \qquad H_2N-(CH_2)_n-\underset{CH_3}{\overset{CH_3}{\underset{|}{\overset{|}{Si}}}}-(O-\underset{CH_3}{\overset{CH_3}{\underset{|}{\overset{|}{Si}}}})_q-(CH_2)_m-NH_2$$

wherein n and m independently are integers from 1 to 10, preferably from 1 to 5, and g is an integer from 1 to 40, preferably from 5 to 25.

The organic diamine of formula II and the amine-terminated organosiloxane of formula VI may be physically mixed prior to reaction with the bis(ether anhydride)(s), thus forming a random copolymer. Alternatively, block or alternating copolymers may be formed by forming prepolymers or sequential addition of reactants, as is well-known in the polymer arts.

Preferred amine-terminated organosiloxanes are those of the formula VI, in which n and m are each 3, and which have a molecular weight distribution such that g has an average value ranging from 9 to 20.

The diamine component of the siloxane polyetherimide copolymers generally contains from 20 to 50 mole b of the amine-terminated organosiloxane of formula VI and from 50 to 80 mole b of the organic diamine of formula II. In preferred copolymers, the diamine component contains from 25 to 40 mole %, most preferably 30 mole % of the amine-terminated organosiloxane.

Both the polyetherimides and the siloxane polyetherimide copolymers used in the blends of this invention may be prepared by any of the procedures conventionally used for preparing polyetherimides. A presently preferred method of prenaration is described in US-A-4,417,044.

The polycarbonates used in the blends of this invention are well-known, commercially available resins. They are high molecular weight, thermoplastic, aromatic polymers and include homopolycarbonates, copolycarbonates and copolyestercarbonates and mixtures thereof, which have average molecular weights of 8,000 to more than 200,000, preferably of 20,000 to 80,000 and an intrinsic viscosity (I.V.) of from 0.40 to 1.5 dl/g as measured in methylene chloride at 25 degrees C. In one embodiment, the polycarbonates are derived from dihydric phenols and carbonate precursors and generally contain recurring structural units of the formula,

$$\left[ -O-Y-O-\overset{\overset{O}{\|}}{C}- \right]$$

where Y is a divalent aromatic radical of the dihydric phenol employed in the polycarbonate-producing reaction.

Suitable dihydric phenols for producing polycarbonates include the dihydric phenols such as, for example, 2,2-bis(4-hydroxyphenyl)propane, bis(4-hydroxyphenyl)-methane, 2,2-bis(4-hydroxy-3-methylphenyl)propane, 4,4-bis(4-hydroxyphenyl)heptane, 2,2-(3,5,3′,5′-tetrachloro-4,4′-dihydroxyphenyl)propane, 2,2-(3,5,3′,5′-tetrabromo-4-4′-dihydroxyphenyl)propane, and 3,3′-dichloro-4,4′-dihydroxydiphenyl)methane. Other dihydric phenols which are also suitable for use in the preparation of the above polycarbonates are disclosed in U.S-A -2,999,835, 3,038,365, 3,334,154, and 4,131,575.

It is of course possible to employ two or more different dihydric phenols or a copolymer of a dihydric phenol with a glycol or with a hydroxy- or acid-terminated polyester, or with a dibasic acid in the event a carbonate copolymer or interpolymer rather than a homopolymer is desired for use in the preparation of the blends of this invention. Blends of any of the above materials can also be employed to provide the aromatic polycarbonate. In addition, branched polycarbonates, such as are described in U.S- A - 4,001,184, can be utilized in the practice of this invention, as can blends of a linear polycarbonate and a branched polycarbonate.

The carbonate precursor employed can be either a carbonyl halide, a carbonate ester or a haloformate. The carbonyl halides which can be employed are carbonyl bromide, carbonyl chloride and mixtures thereof. Typical of the carbonate esters which can be employed are diphenyl carbonate; a di(halophenyl)carbonate, such as di(chlorophenyl)carbonate, di(bromophenyl)carbonate, di(trichlorophenyl)carbonate, di(tribromophenyl)carbonate, etc.; a di(alkylphenyl)carbonate, such as di(tolyl)carbonate, etc.; di(naphthyl)carbonate; di(chloronaphthyl)carbonate; or mixtures thereof. The suitable haloformates include bishaloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene, is preferred.

The polycarbonate may also be a copolyestercarbonate, as described in U.S- A -4,430,484 and the references cited therein. Preferred polyestercarbonates are those derived from the dihydric phenols and carbonate precursors described above and aromatic dicarboxylic acids or their reactive derivatives, such as the acid dihalides, e.g., dichlorides. A quite useful class of aromatic polyestercarbonates are those derived from bisphenol A; terephthalic acid, isophthalic acid or a mixture thereof or their respective acid chlorides; and carbonyl chloride. If a mixture of terephthalic acid and isophthalic acid is employed, the weight ratio of terephthalic acid to isophthalic acid may be from 5:95 to 95:5.

The polycarbonates used in the subject blends can be manufactured by known processes, such as, for example, by reacting a dihydric phenol with a carbonate precursor such as diphenyl carbonate or carbonyl chloride in accordance with methods set forth in the above-cited literature and U.S- A -4,018,750 and 4,123,436, or by transesterification techniques such as are disclosed in U.S- A -3,153,008, as well as other processes known to those skilled in the art.

The aromatic polycarbonates are typically prepared by employing a molecular weight regulator, an acid acceptor and a catalyst. The molecular weight regulators which can be employed include phenol, cyclohexanol, methanol, alkylated phenols, such as octylphenol, para-t-butylphenol, etc. Preferably, phenol or an alkylated phenol is employed as the molecular weight regulator.

The acid acceptor can be either an organic or an inorganic acid acceptor. A suitable organic acid acceptor is a tertiary amine and includes such materials as pyridine, triethylamine, dimethylaniline, tributylamine, etc. The inorganic acid acceptor can be one which can be either a hydroxide, a carbonate, a biscarbonate, or a phosphate of an alkali or alkaline earth metal.

The catalysts which can be employed are those that typically aid the polymerization of the monomer with carbonyl chloride. Suitable catalysts include tertiary amines such as triethylamine, tripropylamine, N,N-dimethylaniline, quaternary ammonium compounds, such as for example, tetraethylammonium bromide, cetyl triethylammonium bromide, tetra-n-heptylammonium iodide, tetra-n-propylammonium bromide, tetramethylammonium chloride, tetramethylammmonium hydroxide, tetra-n-butylammonium iodide, benzyltrimethylammonium chloride and quaternary phosphonium compounds, such as for example, n-butyltriphenyl phosphonium bromide and methyltriphenyl phosphonium bromide.

Also included are branched polycarbonates wherein a polyfunctional aromatic compound is reacted with the monomer and carbonate precursor to provide a thermoplastic randomly branched polycarbonate. The polyfunctional aromatic compounds contain at least three functional groups which are carboxyl, carboxylic anhydride haloformyl, or mixtures thereof. Illustrative polyfunctional aromatic compounds which can be employed include trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, and benzophenonetetracarboxylic anhydride. The preferred polyfunctional aromatic compounds are trimellitic anhydride and trimellitic acid or their acid halide derivatives.

The relative proportions of the components of the present blends may vary widely. In general, the siloxane-polyetherimide copolymer amounts range from 2% by wt. to 40% by wt., preferably from 5% by wt. to 30% by wt. of the total polymer content.

Blending a siloxane-polyetherimide copolymer with a polyetherimide has been found to significantly improve several of the physical properties of the polyetherimide. In particular, the impact strength of the blend is considerably better than that of the unmodified polyetherimide. In addition, the blend is easily fabricated into useful parts by sheet extrusion, thermoforming, injection molding and blow molding. Blow molding can be an efficient and economical procedure for mass production of certain types of components. The heat distortion temperatures (HDT) of binary polyetherimide/siloxane-polyetherimide copolymer blends are unexpectedly high, especially in view of the rather low HDT's of the unblended siloxane polyetherimide copolymers. Further unexpected advantages of the polyetherimide/siloxane polyetherimide copolymer blends are their greater resistance to crack propagation and enhanced retention of impact resistance after heat aging as compared to corresponding unmodified polyetherimides. The latter property can be important in applications requiring thermoforming.

Surprisingly, the addition of a polycarbonate to a polyetherimide/siloxane-polyetherimide copolymer blend further improves the properties of the blend without sacrificing the physical properties described above. The primary benefit provided by the polycarbonate component is to impart solvent resistance to the blends. The impact strengths of the resulting blends are particularly high.

The polycarbonate is employed in the blends at a concentration sufficient to impart significant solvent resistance. Such amount generally ranges from 5% to 40% by weight, preferably from 10% to 30% by weight of the total polymer content. The polyetherimide component of the blends therefore constitutes from 20% by wt. to 93% by wt. of the total polymer content, depending upon the concentrations of the other polymeric ingredients.

In addition to the polymeric ingredients, the blends may contain other materials, such as fillers, additives, reinforcing agents and, pigments. The blends of this invention exhibit very low flammabilities. The blends meet or exceed the flammability standards of Part 25 of Title 14 of the Code of Federal Regulations. Moreover, in laboratory tests at 1.5875 mm (1/16″) thickness, they were found to meet or satisfy UL 94 V-O requirements for flammability, as established by Underwriters Laboratories' "Flammability of Plastic Materials Bulletin" of January 24, 1980.

Various blends have been prepared in accordance with this invention and tested for physical properties and flame resistance. The results of these tests are shown in the following examples, which are provided for illustration only and are not intended to be limiting.

Examples 1-12

Polymer blends described in Table I below were prepared by a conventional melt-blending procedure using a laboratory extruder. The blends were extruded into small diameter strands, which were chopped into pellets for further molding into test parts.

The polyetherimide resins employed in these experiments are commercially available resins, sold by General Electric Company, under the trademark, ULTEM®. The polyetherimide employed in these experiments was homopolymer prepared by reacting 2,2-bis[4-(3,4-dicarboxyphenoxy)phenyl] propane dianhydride ("BPA-DA") and m-phenylenediamine. The siloxane polyetherimide copolymer was the reaction product of a mixture of m-phenylenediamine and an amine-terminated organosiloxane, with BPA-DA. The siloxane polyetherimide copolymer designated in Table I as type A was a random copolymer prepared from BPA-DA and a mixture of 60 mole % m-phenylenediamine and 40 mole % of an amine- terminated organosiloxane of formula VI wherein n and m are 3 and g has an average value of 9. The siloxane polyetherimide copolymer designated type B was the same as type A, except that it is a block, rather than random, copolymer. The siloxane polyetherimide copolymer designated type C was the same as type A, except that it is a block copolymer, the diamine component contains 30 mole % of the amine-terminated organosiloxane and the average value of g is 15.

The polycarbonate used in these experiments was the reaction product of bisphenol A and carbonyl chloride. It had an intrinsic viscosity of about 0.7 as measured in a chloroform solution at 25°C.

The data provided in Table I demonstrates that the blends of the present invention have unexpectedly high heat distortion temperatures, have improved impact resistance, and are amenable to blow molding. Moreover, these blends have been found to have low flammability and heat release values, thus making them particularly suited to aircraft interior component applications.

Examples 13-18

A series of sample blends was tested for solvent resistance. The results of these tests are shown in Table II below. The test procedure was designed to simulate intermittent exposure to solvents, as in cleaning, where materials and parts may be mechanically stressed as a result of fabrication conditions or techniques.

Injection molded specimens (6.35 cm x 1.27 cm x 0.3175 cm (2.5″ x 0.5″ x 0.125″)) were mounted on curved fixtures so that predetermined strains, and hence stress, were induced in the outer layer of the material.

The stressed surface of the specimens were then wetted with the solvents (toluene) or methylethyl ketone) using a cotton-tipped applicator. The specimens were then allowed to air dry (for periods of 10 minutes to 1 hour) and the application of the solvent was repeated unless failure had already occurred. The number of hours of solvent treatment and the number of times the specimen was wiped with solvent and allowed to dry are indicated in Table II for each test specimen.

Each specimen was observed and graded according to the following system:

1 - No effect

2 - Only microscopic effect (Specimen appears unaffected by visual examination, but tiny surface crazes could be seen under magnification)
3 - Surface disturbed
4 - Visible crazing
5 - Failure (specimen break)

The Polymer blends for these tests were prepared as in Examples 1-12. The polyetherimide used in these tests was the polymer designated "type A" in Examples 1-12. The siloxane polyetherimide copolymer used in Example 13 was the polymer designated "type A" in Examples 1-12, and the siloxane polyetherimide copolymer used in Examples 14-18 was the polymer designated "type B" in Examples 1-12. The polycarbonate used in these tests was the same as that used in Examples 1-12.

TABLE 1

| Example No. | Poly-ether-imide conc. (wt.%) | Siloxane Poly-ether-imide co-polymer conc. (wt.%) | Siloxane Poly-ether-imide co-polymer type | Poly-carbonate conc. (wt. %) | Heat Dutortion Temperature[1] at (264 psi) 1.82MPa (°c) | Izod Impact[2] (ft. - lb/in.) J/cm Notched | Izod Impact[2] (ft. - lb/in.) J/cm Rev Notched | Blow Moldability | Dynatup® on Blow Molded Part (ft-lb) |
|---|---|---|---|---|---|---|---|---|---|
| 1 | 65 | 5 | A | 30 | 168 | (1.02) 0.54 | (>16)>8.54 | -- | — |
| 2 | 70 | 10 | B | 20 | 179.3 | (2.40) 1.28 | (73.5) 39.23 | — | — |
| 3 | 70 | 15 | B | 15 | 177.6 | (2.00) 1.07 | (74.2) 39.61 | -- | — |
| 4 | 70 | 20 | B | 10 | 174.0 | (3.70) 1.97 | (65.8) 35.12 | — | — |
| 5 | 50 | 10 | B | 40 | 144.9 | (5.20) 2.77 | (61.4) 32.77 | — | — |
| 6 | 70 | 10 | C | 20 | 179.0 | (2.70) 1.44 | — | Fair-Good | (8.4) 11.39 |
| 7 | 70 | 10 | B | 20 | 176.8 | (1.90) 1.01 | — | Good | (2.5) 3.39 |
| 8 | 70 | 20 | C | 10 | 178.4 | (11.20) 5.98 | — | Good | (13.7) 18.57 |
| 9 [5] | 70 | 10 | C | 20 | 174.9 | (3.50) 1.87 | — | Good | (1.8) 2.44 |
| 10 [5] | 65 | 15 | C | 20 | 176.7 | (13.60) 7.26 | — | — | — |
| * 11 | 85 | 15 | B | — | 191.5 | (1.6) 0.85 | — | Good-Very Good | (8.7) 11.79 |
| * 12 | 70 | — | - | 30 | 168 | 0.9 | — | Fair | — |

* Comparative Example.

Table I (continued)

| | Heat Release⁴ | | | |
|---|---|---|---|---|
| Example No. | 2 min. total heat release | Max. heat release rate | 2 min. total smoke release | Max. smoke release rate |
| 1 | -- | -- | -- | -- |
| 2 | -- | -- | -- | -- |
| 3 | -- | -- | -- | -- |
| 4 | -- | -- | -- | -- |
| 5 | -- | -- | -- | -- |
| 6 | 38 | 85 | 54 | 117 |
| 7 | 43 | 95 | 58 | 135 |
| 8 | 52 | 91 | 93 | 162 |
| 9 | 18 | 76 | 25 | 102 |
| 10 | -- | -- | -- | -- |
| 11 | -- | -- | -- | -- |
| 12 | -- | -- | -- | -- |

TABLE 2

| Example No. | Poly-ether-imide conc. (wt.%) | Siloxane Poly-ether-imide co-polymer conc. (wt.%) | Poly-carbonate conc. (wt. %) | Toluene Treatment (Rating (hours/wipes)) at 1.09% Strain | at 0.87% Strain | at 0.69% Strain | Methylethyl/Ketone Treatment (Rating (hours/wipes)) at 1.09% Strain | at 0.87% Strain |
|---|---|---|---|---|---|---|---|---|
| * 13 | 85 | 15 | — | — | 5(0.33/3) | 5(0.67/5) | — | 2(3.25/13) |
| 14 | 70 | 10 | 20 | 2(4.25/18) | — | — | 2(4.25/18) | — |
| 15 | 70 | 15 | 15 | 2(4.25/18) | — | — | 2(4.25/18) | — |
| 16 | 70 | 20 | 10 | 2(4.25/18) | — | — | 2(4.25/18) | — |
| 17 | 50 | 10 | 40 | 3(4.25/18) | — | — | 4(0.5/3) | — |
| * 18 | 100 | — | — | 5(0.002/1) | 5(0.08/1) | 5(0.5/2) | 5(0.02/1) | 5(0.02/1) |

* Comparative Example.

## Footnotes to Table I

1. Determined by ASTM procedure D648.
2. Determined by ASTM procedure D256 (Rev. Notch test employs test bar with the notch on the side opposite impact).
3. Dynatup® testing measures the high-speed penetration properties of plastics using load and displacement sensors. The testing was performed substantially by ASTM procedure D3763-85 using a Dynatup® instrument. Tests were performed on a 10.16 cm (4") diameter, 3.175 mm (1/8") thick injection molded disc supported by a 7.62 cm (3") diameter support ring. Five to ten replicates of each sample were tested to determine the mean work (ft. - lb.) J required to cause sample failure.
4. Tests performed at Ohio State University according to procedures described in 14 C.F.R. Part 25. Tests were performed on 1.905 mm - 2.159 mm (0.075-0.085 in.) thick blow molded test parts.
5. Blends contained a high level of titanium dioxide-base pigments.

## Claims

1. A polymer blend which comprises from 20% by wt. to 93% by wt. of a polyetherimide, from 2 wt. % to 40 wt. % of a siloxane polyetherimide copolymer and from 5% by wt. to 40 by wt. of a polycarbonate which has an average molecular weight of 8000 or more and has an intrinsic viscosity of from 0.4 dl/g to 1.5 dl/g as measured in methylene chloride at 25°C., said polyetherimide containing repeating groups of the formula

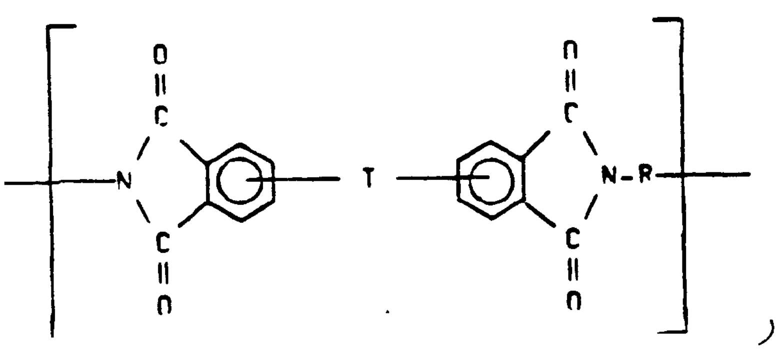

the number of such groups being greater than 1, where T is -O- or a group of the formula

-O-Z-O-

wherein the divalent bonds of the -O- or the -O-Z-O- group are in the 3,3', 3,4', 4,3' or 4,4' positions; Z is selected from (A)

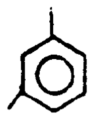 , 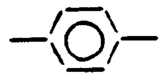 , 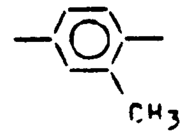 ,

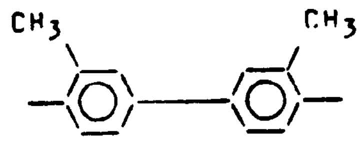 , 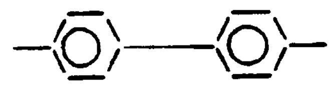

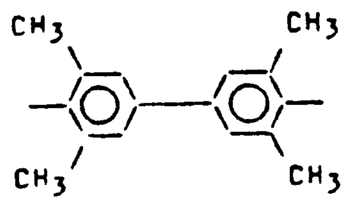 and 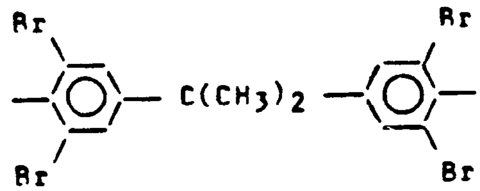

and (B) divalent organic radicals of the general formula

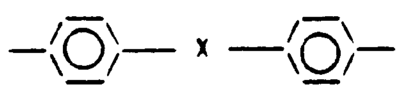

where X is a member selected from divalent radicals of the formulas

$$-C_yH_{2y}-,\ -\overset{O}{\overset{\|}{C}}-,\ -\underset{\underset{O}{\|}}{\overset{O}{\overset{\|}{S}}}-,\ -O-\ \text{and}\ -S-$$

where y is an integer from 1 to 5; and R is a divalent organic radical selected from (a) aromatic hydrocarbon radicals having from 6 to 20 carbon atoms and halogenated derivatives thereof, (b) alkylene radicals having from 2 to 20 carbon atoms, cycloalkylene radicals having from 3 to 20 carbon atoms, and (c) divalent radicals of the general formula

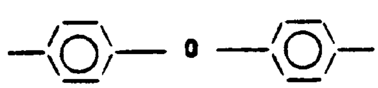

where Q is selected from

$$-S-,\ -O-,\ -\overset{O}{\overset{\|}{C}}-,\ -\underset{\underset{O}{\|}}{\overset{O}{\overset{\|}{S}}}-,\ \text{and}\ -C_xH_{2x}-,$$

and x is an integer from 1 to 5.

**2.** The polymer blend of claim 1 , wherein the polyetherimide further contains repeating units of the formula

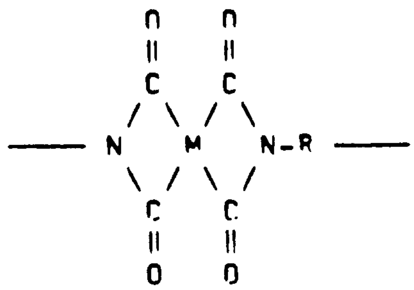

wherein R is as defined in claim 1 and M is selected from

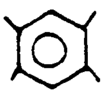 , 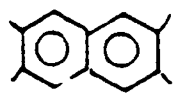 and 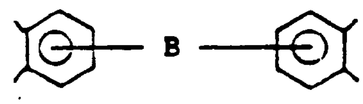

where B is -S- or

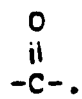

3. The polymer blend of claim 1, wherein the siloxane polyetherimide copolymer consists of repeating units of the formula

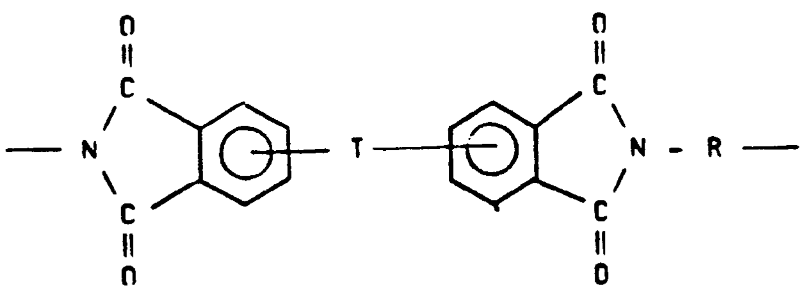

and repeating units of the formula

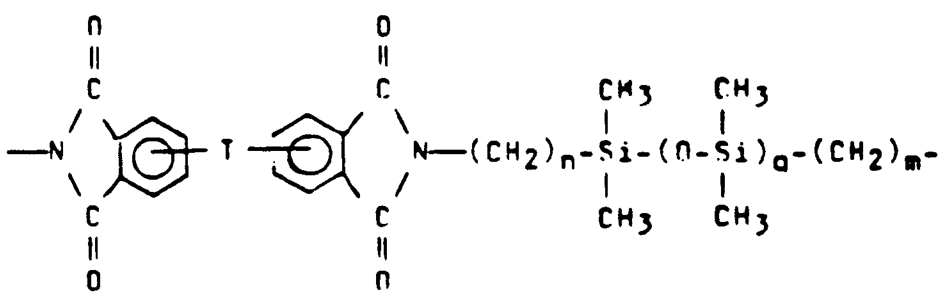

where T and R are defined as in claim 1, n and m independently are integers from 1 to 10 and g is an integer from 1 to 40.

4. The polymer blend of claim 3, wherein the siloxane polyetherimide copolymer further contains repeating units of the formula

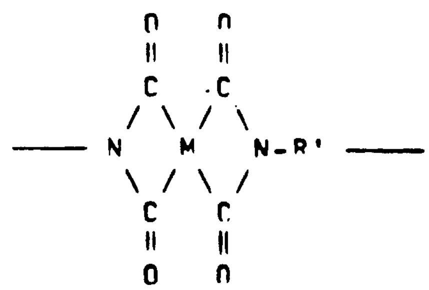

wherein M is defined as in claim 2 and R′ is R or a group of the formula

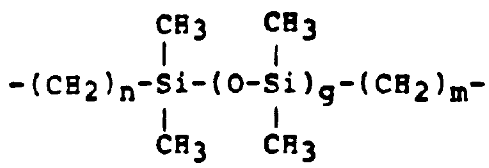

wherein n and m independently are integers from 1 to 10 and g is an integer from 1 to 40.

**5.** The polymer blend of anyone of claims 1 to 3 wherein the polycarbonate contains repeating units of the formula

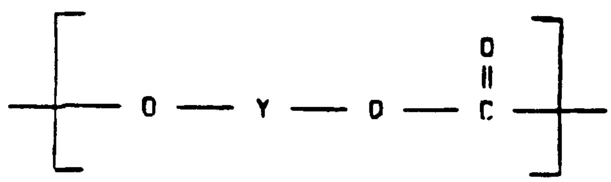

wherein Y is a divalent aromatic radical.

**6.** The polymer blends of claim 5, wherein Y is a divalent aromatic residual from a dihydric phenol selected from
2,2-bis(4-hydroxyphenyl)-propane, bis(4-hydroxyphenyl)methane, 2,2-bis(4-hydroxy-methylphenyl)propane, 4,4′-bis(4-hydroxyphenyl)heptane, 2,2-(3,5,3′,5′-tetrachloro-4,4′-dihydroxyphenyl)propane, 2,2-(3,5,3′,5′-tetrabromo-4,4′-dihydroxyphenyl)propane and 3,3′-dichloro-4,4′-dihydroxydiphenyl)methane or mixtures thereof.

**7.** The polymer blend of claims 1 to 3 wherein the polycarbonate is a polyestercarbonate derived from an aromatic dihydric phenol, a carbonate precursor and an aromatic dicarboxylic acid.

**8.** The polymer blend of claim 7, wherein the aromatic dihydric phenol is selected from 2,2-bis(4-hydroxyphenyl)propane, bis(4-hydroxyphenyl)methane, 2,2-bis(4-hydroxy-3-methylphenyl)propane, 4,4′-bis(4-hydroxyphenyl)heptane, 2,2-(3,5,3′,5′-tetrachloro-4,4′-dihydroxyphenyl)propane, 2,2-(3,5,3′,5′-tetrabromo-4,4′-dihydroxyphenyl)propane and 3,3′-dichloro-4,4′-dihydroxydiphenyl)methane or mixtures thereof.

**9.** The polymer blend of claim 8, wherein the aromatic dicarboxylic acid is terephthalic acid or isophthalic acid, or a mixture thereof.

**10.** The polymer blend of claim 3, wherein n and m are integers from 1 to 5, and g is an integer from 5 to 25.

**11.** The polymer blend of claim 10, wherein g has an average value from 9 to 20.

**12.** The polymer blend of anyone of claims 1 to 3 wherein the siloxane polyetherimide copolymer is a random copolymer.

**13.** The polymer blend of anyone of claims 1 to 3 wherein the siloxane polyetherimide copolymer is a block copolymer.

**14.** The polymer blend of anyone of claims 1 to 3 wherein the siloxane polyetherimide copolymer is an alternating copolymer.

**15.** The polymer blend of claim 3, wherein the diamine component of the siloxane polyetherimide copolymer contains from 20 to 50 mole % of the amine-terminated organosiloxane.

**16.** The polymer blend of claim 3, wherein the diamine component of the siloxane polyetherimide copolymer contains 25 to 40 mole % of the amine-terminated organosiloxane.

**17.** The polymer blend of anyone of claims 1 to 3, which contains from 5% to 30% by wt. of the siloxane polyetherimide copolymer, from 10% to 30% by wt. of the polycarbonate and from 40% to 85% by wt.of the polyetherimide.

**18.** The polymer blend of claim 17, wherein the polyetherimide consists of repeating units of the formula

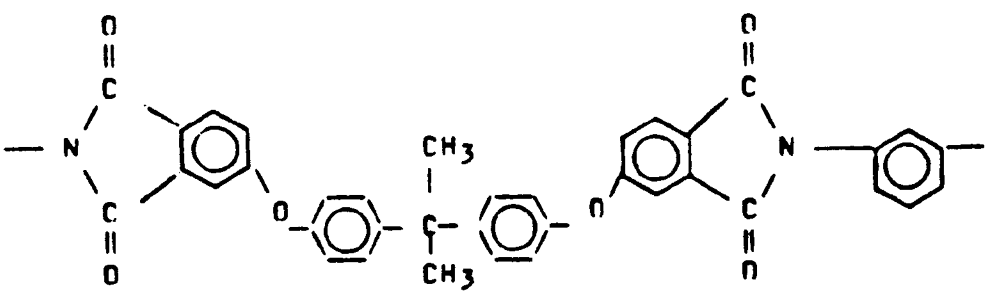

**19.** The polymer blend of claim17 , wherein the siloxane polyetherimide copolymer consists of repeating units of the formula

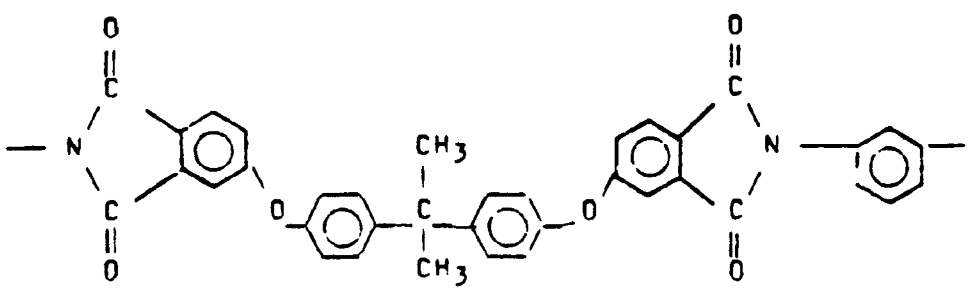

and

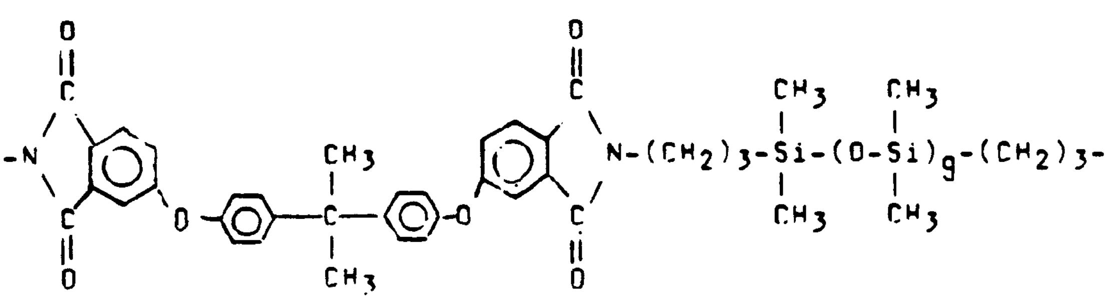

wherein g has an average value of from 9 to 20.

**20.** The polymer blend of claim 17 which further comprises fillers, pigments, reinforcing agents or mixtures thereof.

## Patentansprüche

1. Polymermischung, die enthält: von 20 Gew.-% bis 93 Gew.-% eines Polyätherimids, von 2 Gew.-% bis 40 Gew.-% eines Siloxan-Polyätherimid-Copolymeren und von 5 Gew.-% bis 40 Gew.-% eines Polycarbonats, welches ein mittleres Molekulargewicht von 8000 oder mehr, und eine grundmolare Viskosität von 0,4 dl/g bis 1,5 dl/g, gemessen in Methylenchlorid bei 25°C aufweist, das Polyätherimid wiederkehrende Gruppen der Formel

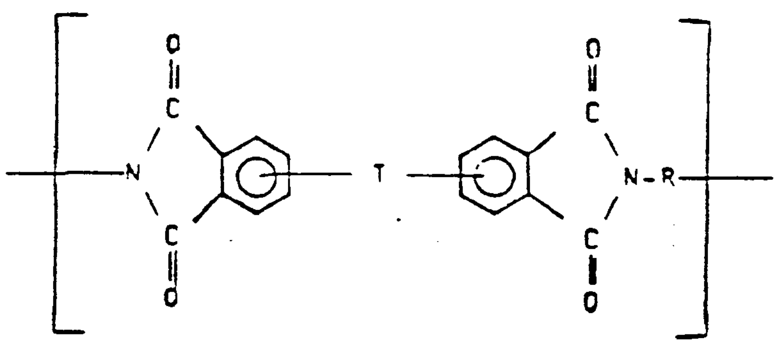

enthält, wobei die Zahl solcher Gruppen größer als 1 ist, worin T gleich -O- oder eine Gruppe der Formel

-O-Z-O-

ist, worin die zweiwertigen Bindungen von -O- oder von der Gruppe -O-Z-O- in den 3,3′, 3,4′, 4,3′ oder 4,4′ Stellungen angeordnet sind, Z ausgewählt ist aus (A)

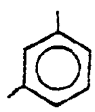 , 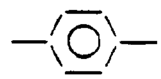 , 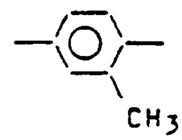 ,

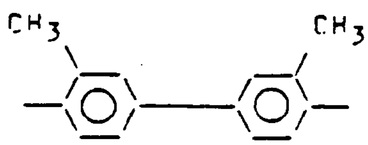 , 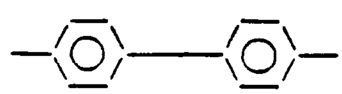

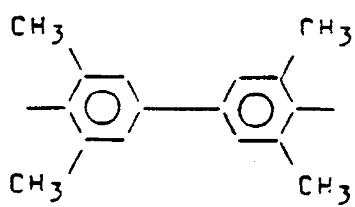 and 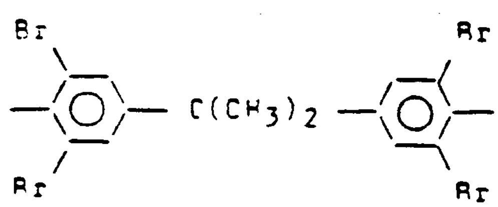

und (B) zweiwertigen organischen Resten der allgemeinenFormel

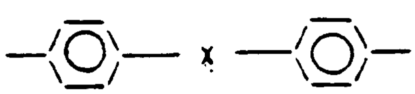

worin X ein Glied ist ausgewählt aus zweiwertigen Resten der Formeln

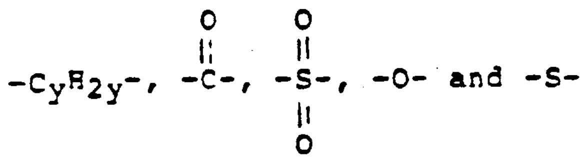

worin Y eine ganze Zahl von 1 bis 5 ist, und R ein zweiwertiger organischer Rest ist, ausgewählt aus

(a) aromatischen Kohlenwasserstoffresten mit 6 bis 20 Kohlenstoffatomen und halogenierten Derivaten derselben,

(b) Alkylenresten mit 2 bis 20 Kohlenstoffatomen, Zykloalkylenresten mit 3 bis 20 Kohlenstoffatomen, und

(c) zweiwertigen Resten der allgemeinen Formel

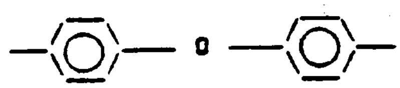

worin Q ausgewählt ist aus

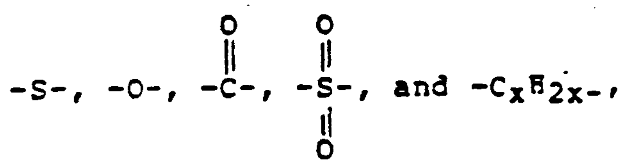

und X eine ganze Zahl von 1 bis 5 ist.

2. Polymermischung nach Anspruch 1, worin das Polyätherimid weiterhin wiederkehrende Einheiten der Formel

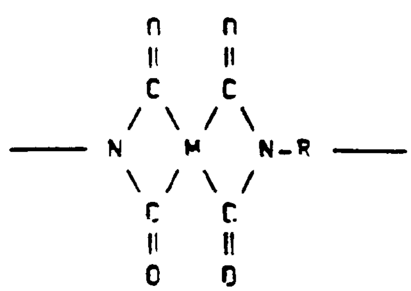

aufweist, worin R die in Anspruch 1 gegebene Definition besitzt und M ausgewählt ist aus

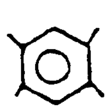 , 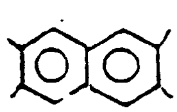 und 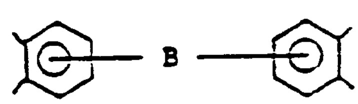

worin B -S- oder

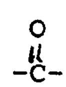

ist.

3. Polymermischung nach Anspruch 1, worin das Siloxan-Polyätherimid-Copolymere aus wiederkehrenden Einheiten der Formel

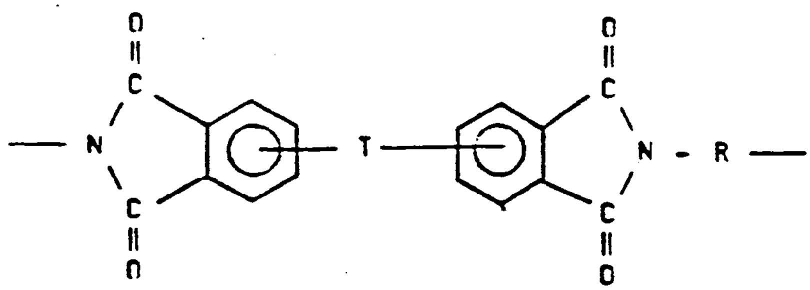

und wiederkehrenden Einheiten der Formel

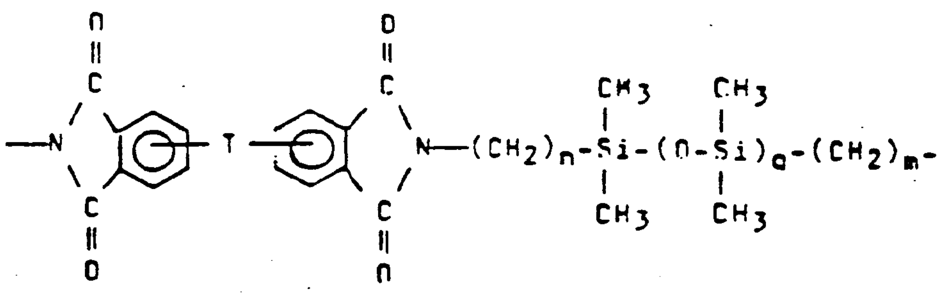

besteht, worin T und R die in Anspruch 1 gegebene Definition besitzen, n und m unabhängig ganze Zahlen von 1 bis 10 sind, und g eine ganze Zahl von 1 bis 40 ist.

4. Polymermischung nach Anspruch 3, worin das Siloxan-Polyätherimid -Copolymer weiterhin wiederkehrende Einheiten der Formel

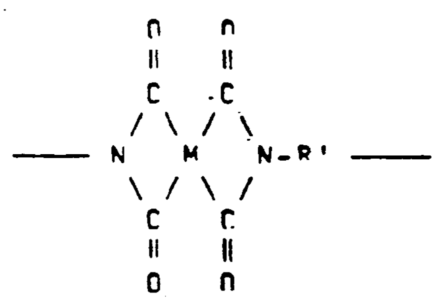

enthält, worin M die in Anspruch 2 gegebene Definition besitzt und R′ gleich R oder einer Gruppe der Formel

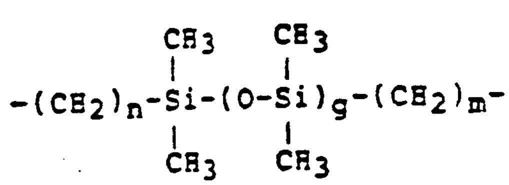

ist, worin n und m unabhängig ganze Zahlen von 1 bis 10 sind, und g eine ganze Zahl von 1 bis 40 ist.

5. Polymermischung nach einem der Ansprüche 1 bis 3, worin das Polycarbonat wiederkehrende Einheiten der Formel

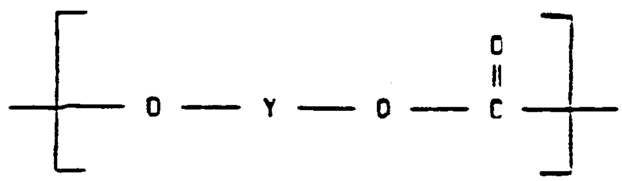

enthält, worin Y ein zweiwertiger aromatischer Rest ist.

6. Polymermischungen nach Anspruch 5, worin Y ein zweiwertiger aromatischer Rest aus einem zweiwertigen Phenol ist, ausgewählt aus 2,2-Bis(4-hydroxyphenyl)propan, Bis(4-hydroxyphenyl)-methan, 2,2-Bis(4-hydroxy-3-methylphenyl)-propan, 4,4′-Bis(4-hydroxyphenyl)-heptan, 2,2-(3,5,3′,5′-Tetrachlor-4,4′-dihydroxyphenyl)-propan, 2,2-(3,5,3′,5′-Tetrabrom-4,4′-dihydroxyphenyl)-propan und 3,3′-Dichlor-4,4′-dihydroxydiphenyl)-methan oder Mischungen derselben.

7. Polymermischung nach den Ansprüchen 1 bis 3, worin das Polycarbonat ein Polyestercarbonat ist, ausgewählt aus einem aromatischen zweiwertigen Phenol, einem Carbonatvorläufer, und einer aromatischen Dicarbonsäure.

8. Polymermischung nach Anspruch 7, worin das aromatische zweiwertige Phenol ausgewählt ist aus 2,2-Bis(4-hydroxyphenyl)-propan, Bis(4-hydroxyphenyl)-methan, 2,2-Bis(4-hydroxy -3-methylphenyl)propan, 4,4′-Bis(4-hydroxyphenyl)heptan, 2,2-(3,5,3′,5′-Tetrachlor-4,4′-dihydroxyphenyl)propan, 2,2-(3,5,3′,5′-Tetrabrom-4,4′-dihydroxyphenyl)-propan und 3,3′-Dichlor-4,4′-dihydroxydiphenyl)-methan oder Mischungen derselben.

9. Polymermischung nach Anspruch 8, worin die aromatische Dicarbonsäure Terephthalsäure oder Isophthalsäure oder eine Mischung derselben ist.

10. Polymermischung nach Anspruch 3, worin n und m ganze Zahlen von 1 bis 5 sind und g eine ganze Zahl von 5 bis 25 ist.

11. Polymermischung nach Anspruch 10, worin g einen mittleren Wert von 9 bis 20 aufweist.

12. Polymermischung nach einem der Ansprüche 1 bis 3, worin das Siloxan-Polyätherimid-Copolymer ein statistisches Copolymer ist.

13. Polymermischung nach einem der Ansrpüche 1 bis 3, worin das Siloxan-Polyätherimid-Copolymer ein Blockcopolymer ist.

14. Polymermischung nach einem der Ansprüche 1 bis 3, worin das Siloxan-Polyätherimid-Copolymer ein alternierendes Copolymer ist.

15. Polymermischung nach Anspruch 3, worin die Diaminkomponente des Siloxan-Polyätherimid-Copolymeren 20 bis 50 Mol-% des mit Amin endenden Organosiloxans enthält.

16. Polymermischung nach Anspruch 3, worin die Diaminkomponente des Siloxan-Polyätherimid-Copolymeren 25 bis 40 Mol-% des mit Diamin endenen Organosiloxans enthält.

17. Polymermischung nach einem der Ansprüche 1 bis 3, welche von 5 bis 30 Gew.-% des Siloxan-Polyätherimid-Copolymeren, von 10 bis 30 Gew-% des Polycarbonats, und von 40 bis 85 Gew.-% des Polyätherimids enthält.

18. Polymermischung nach Anspruch 17, worin das Polyätherimid aus wiederkehrenden Einheiten der Formel

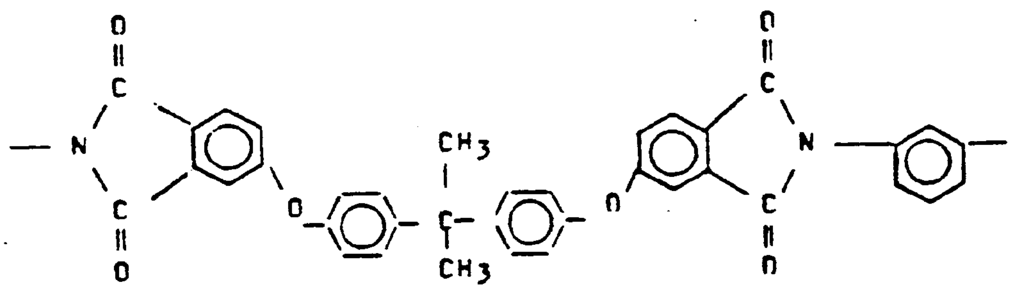

besteht.

19. Polymermischung nach Anspruch 17, worin das Siloxan-Polyätherimid -Copolymere aus wiederkehrenden Einheiten der Formel

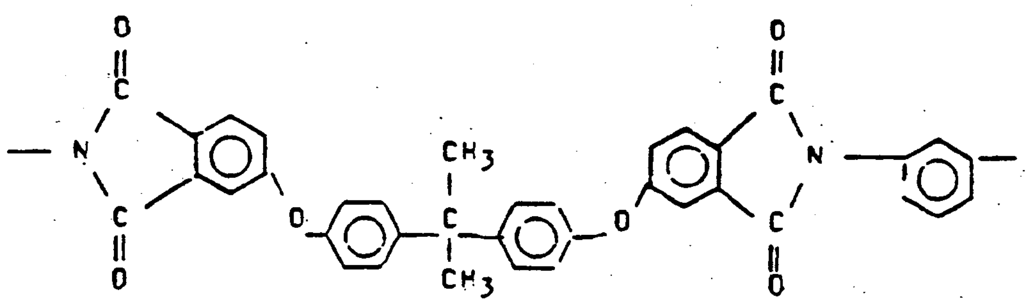

und

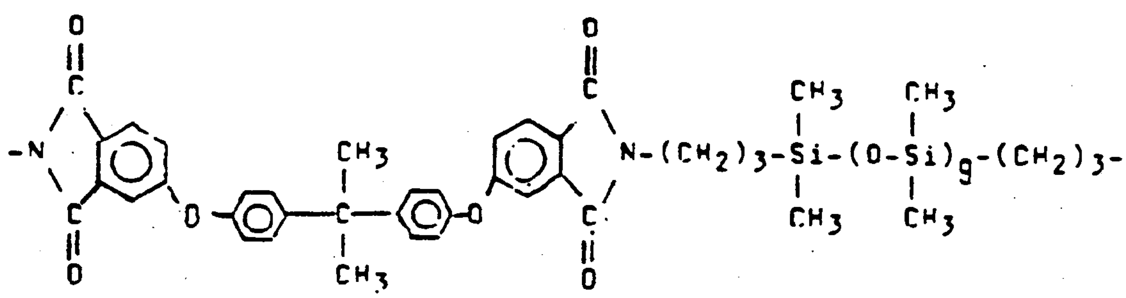

besteht,worin g einen mittleren Wert von 9 bis 20 aufweist.

20. Polymermischung nach Anspruch 17, die weiterhin Füllstoffe, Pigmente, verstärkende Mittel, oder Mischungen derselben aufweist.

## Revendications

1. Mélange de polymères qui comprend de 20 % en poids à 93 % en poids d'un poly(éther imide), de 2 % en poids à 40 % en poids d'un copolymère siloxane-poly(éther imide), et de 5 % en poids à 40 % en poids d'un polycarbonate qui présente une masse moléculaire moyenne d'au moins 8000 et une viscosité intrinsèque, mesurée dans du chlorure de méthylène à 25°C, de 0,4 dl/g à 1,5 dl/g, ledit poly (éther imide) comportant des groupes répétitifs de formule

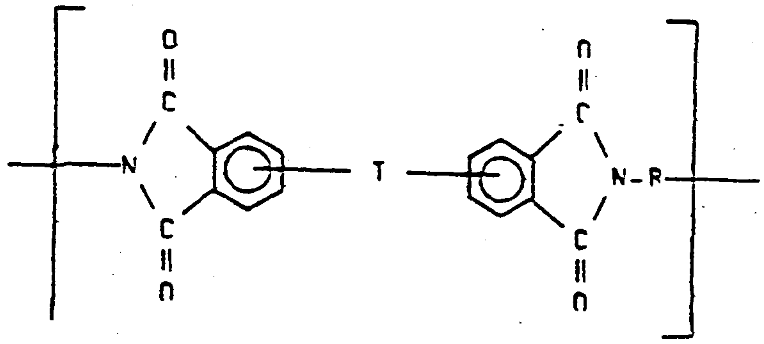

dont le nombre est supérieur à 1 et dans lesquels T représente -O- ou un groupe de formule -O-Z-O-, la paire de liaisons de l'atome -O- ou du groupe -O-Z-O- étant située en position 3,3'-, 3,4'-, 4,3'- ou 4,4'-, et Z étant choisi parmi (A)

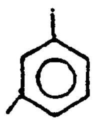 , 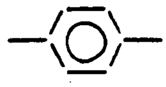 , 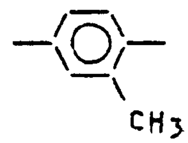 ,

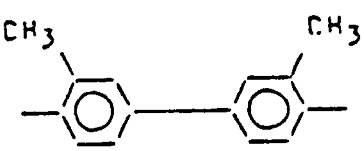 , 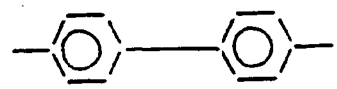

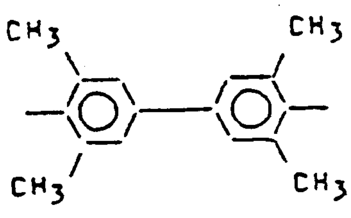 et 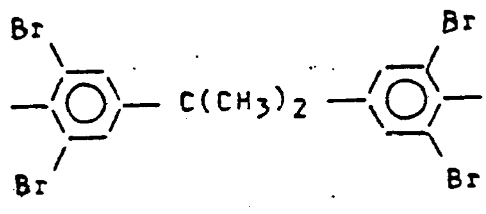

et (B) les radicaux organiques divalents de formule générale

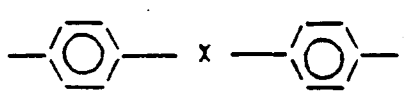

dans laquelle X représente un chaînon choisi parmi les radicaux divalents de formule

$$-C_yH_{2y}-,\ -\overset{O}{\overset{\|}{C}}-,\ -\underset{O}{\underset{\|}{\overset{O}{\overset{\|}{S}}}}-,\ -O-\ \text{et}\ -S-$$

où y représente un nombre entier valant de 1 à 5 ; et R représente un radical organique divalent choisi parmi (a) les radicaux hydrocarbonés aromatiques comportant de 6 à 20 atomes de carbone et leurs dérivés halogénés, (b) les radicaux alkylène comportant de 2 à 20 atomes de carbone et les radicaux cycloalkylène comportant de 3 à 20 atomes de carbone, et (c) les radicaux divalents de formule générale

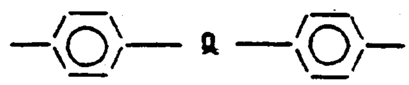

dans laquelle Q est choisi parmi

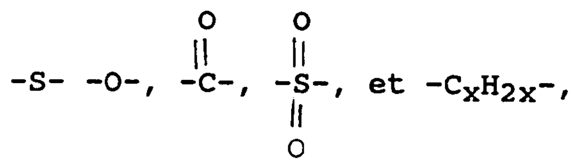

où x représente un nombre entier valant de 1 à 5.

2. Mélange de polymères conforme à la revendication 1, dans lequel le poly(éther imide) comporte en outre des motifs répétitifs de formule

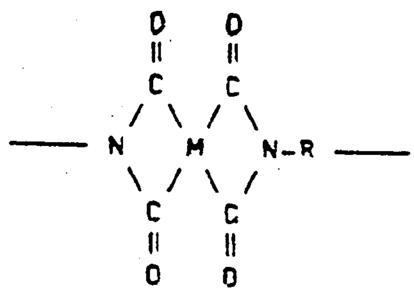

dans laquelle R a la même définition que dans la revendication 1 et M est choisi parmi

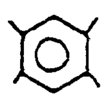 , 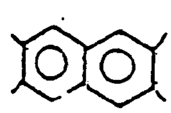 et 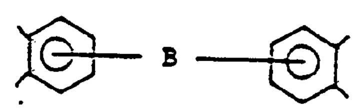

où B représente -S- ou -CO-.

3. Mélange de polymères conforme à la revendication 1, dans lequel le copolymère siloxane-poly(éther imide) est constitué de motifs répétitifs de formule

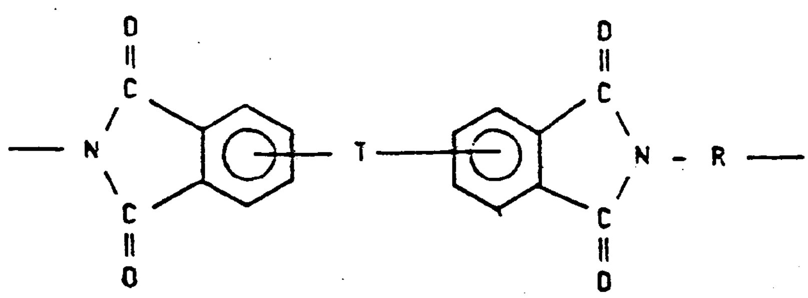

et de motifs répétitifs de formule

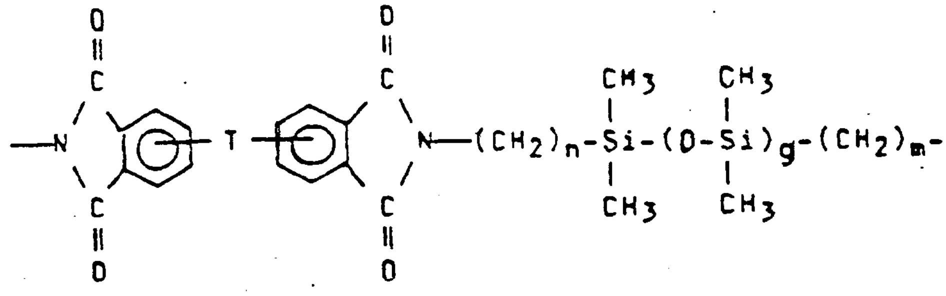

formules dans lesquelles T et R ont les mêmes définitions que dans la revendication 1, n et m représentent, indépendamment, des nombres entiers valant de 1 à 10, et g représente un nombre entier valant de 1 à 40.

**4.** Mélange de polymères conforme à la revendication 3, dans lequel le copolymère siloxane-poly(éther imide) comporte en outre des motifs répétitifs de formule

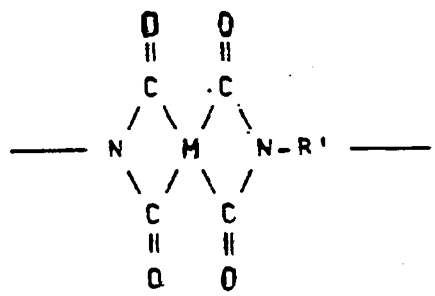

dans laquelle M a la même définition que dans la revendication 2 et R′ est identique à R ou représente un groupe de formule

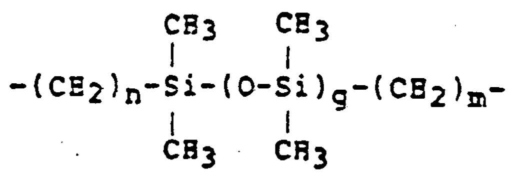

dans laquelle n et m représentent, indépendamment, des nombres entiers valant de 1 à 10 et g représente un nombre entier valant de 1 à 40.

**5.** Mélange de polymères conforme à l'une quelconque des revendications 1 à 3, dans lequel le polycarbonate comporte des motifs répétitifs de formule

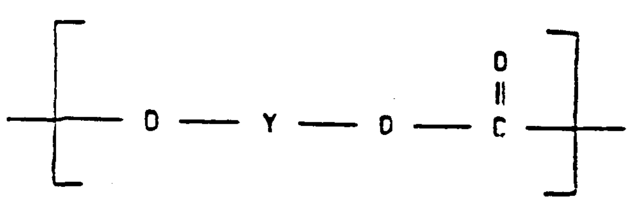

dans laquelle Y représente un radical aromatique divalent.

**6.** Mélange de polymères conforme à la revendication 5, dans lequel Y représente un résidu aromatique divalent dérivé d'un diphénol choisi parmi le 2,2-bis(4-hydroxyphényl)propane, le bis(4-hydroxyphényl)méthane, le 2,2-bis(4-hydroxy-3-méthylphényl)propane, le 4,4′-bis(4-hydroxyphényl)heptane, le 2,2-(3,5,3′,5′-tétrachloro-4,4′-dihydroxyphényl)propane, le 2,2-(3,5,3′,5′-tétrabromo-4,4′-dihydroxyphényl)propane et le 3,3′-dichloro-4,4′-dihydroxydiphényl)méthane, ainsi que leurs mélanges.

7. Mélange de polymères conforme aux revendications 1 à 3, dans lequel le polycarbonate est un poly(ester carbonate) qui dérive d'un diphénol aromatique, d'un précurseur de carbonate et d'un acide dicarboxylique aromatique.

8. Mélange de polymères conforme à la revendication 7, dans lequel le diphénol aromatique est choisi parmi le 2,2-bis(4-hydroxyphényl)propane, le bis(4-hydroxyphényl)méthane, le 2,2-bis(4-hydroxy-3-méthylphényl)propane, le 4,4'-bis(4-hydroxyphényl)heptane, le 2,2-(3,5,3',5'-tétrachloro-4,4'-dihydroxyphényl)propane, le 2,2-(3,5,3',5'-tétrabromo-4,4'-dihydroxyphényl)propane et le 3,3'-dichloro-4,4'-dihydroxydiphényl)méthane, ainsi que leurs mélanges.

9. Mélange de polymères conforme à la revendication 8, dans lequel l'acide dicarboxylique aromatique est de l'acide téréphtalique ou de l'acide isophtalique, ou un mélange de ceux-ci.

10. Mélange de polymères conforme à la revendication 3, dans lequel n et m représentent des nombres entiers valant de 1 à 5 et g représente un nombre entier valant de 5 à 25.

11. Mélange de polymères conforme à la revendication 10, dans lequel la valeur moyenne de g est de 9 à 20.

12. Mélange de polymères conforme à l'une quelconque des revendications 1 à 3, dans lequel le copolymère siloxane-poly(éther imide) est un copolymère statistique.

13. Mélange de polymères conforme à l'une quelconque des revendications 1 à 3, dans lequel le copolymère siloxane-poly(éther imide) est un copolymère séquencé.

14. Mélange de polymères conforme à l'une quelconque des revendications 1 à 3, dans lequel le copolymère siloxane-poly(éther imide) est un copolymère alterné.

15. Mélange de polymères conforme à la revendication 3, dans lequel le constituant diamine du copolymère siloxane-poly(éther imide) comporte de 20 à 50 % en moles d'un organosiloxane à fonctions amine terminales.

16. Mélange de polymères conforme à la revendication 3, dans lequel le constituant diamine du copolymère siloxane-poly(éther imide) comporte de 25 à 40 % en moles d'un organosiloxane à fonctions amine terminales.

17. Mélange de polymères conforme à l'une quelconque des revendications 1 à 3, qui comporte de 5 % à 30 % en poids du copolymère siloxane-poly(éther imide), de 10 % à 30 % en poids du polycarbonate et de 40 % à 85 % en poids du poly(éther imide).

18. Mélange de polymères conforme à la revendication 17, dans lequel le poly(éther imide) est constitué de motifs répétitifs de formule

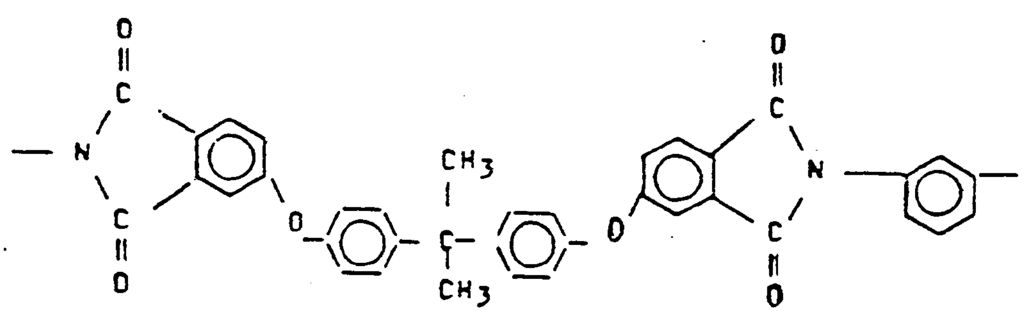

19. Mélange de polymères conforme à la revendication 17, dans lequel le copolyère siloxane-poly(éther imide) est constitué de motifs répétitifs de formules

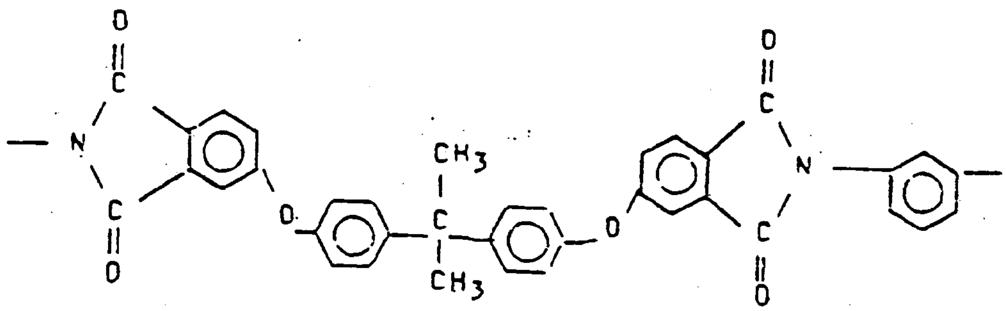

et

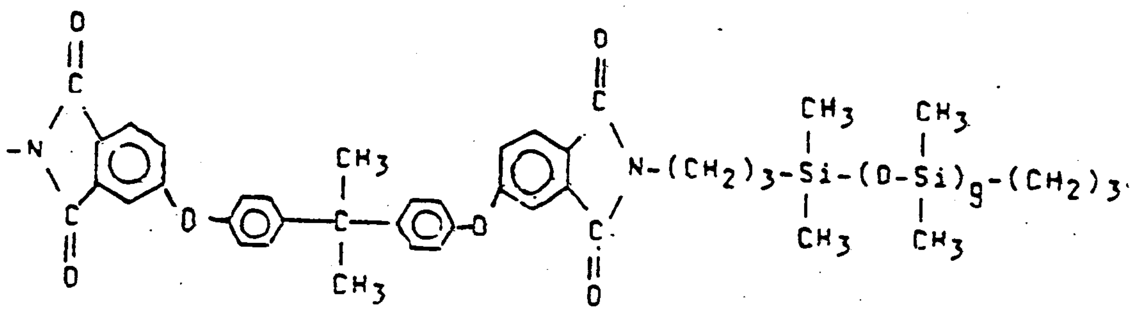

dans laquelle la valeur moyenne de g est de 9 à 20.

**20.** Mélange de polymères conforme à la revendication 17, qui contient en outre des charges, des pigments, des agents de renfort ou des mélanges de tels adjuvants.